# EUROPÄISCHE PATENTANMELDUNG

(11) **EP 1 121 888 A1**
(43) Veröffentlichungstag der Anmeldung: **08.08.2001**
(21) Anmeldenummer: 01102420.5
(22) Anmeldetag: 02.02.2001
(51) Int. Cl.: A47K 10/04, F16B 7/04

(54) **Verbindung zwischen einem rohrförmigen Element und einem Träger**

(30) Priorität: 07.02.2000 DE 10005311
(71) Anmelder: HEWI HEINRICH WILKE GMBH, 34454 Bad Arolsen (DE)
(72) Erfinder: De Backer, Gerard, 34454 Bad Arolsen (DE)
(74) Vertreter: Manitz, Finsterwald & Partner

(57) **Zusammenfassung**

Die Erfindung betrifft eine Verbindung zwischen einem rohrförmigen Element (1), insbesondere einer Haltestange, und einem Träger (2), insbesondere einem Wandhalter, mit wenigstens einem in das rohrförmige Element (1) einführbaren Verriegelungselement (3), das im eingeführten Zustand mit einem durch eine Wandöffnung (7) des rohrförmigen Elementes (1) eingesteckten Befestigungsabschnitt (4) des Trägers (2) in Eingriff bringbar ist, wobei das Verriegelungselement (3) zwischen einer das Einstecken und Herausziehen des Befestigungsabschnittes (4) ermöglichenden Entriegelungsstellung und einer den eingesteckten Befestigungsabschnitt (4) herausziehsicher festhaltenden Verriegelungsstellung verstellbar ist.

## Beschreibung

Die Erfindung betrifft eine Verbindung zwischen einem rohrförmigen Element, insbesondere einer Haltestange, und einem Träger, insbesondere einem Wandhalter.

Ein diese Verbindung verwendender Aufbau aus Haltestange und Wandhalter findet beispielsweise Anwendung als Sanitärausstattung und kann dabei als Handlauf, Haltestange, zur Aufnahme von Behältern oder Handtüchern, von Ablageplattformen oder weiteren Halterungen genutzt werden.

Nachteilig an bekannten Verbindungen zwischen rohrförmigen Elementen und Trägern ist, daß diese bei Verwendung von Befestigungselementen, wie beispielsweise Schrauben, oftmals sichtbar sind und daher das Design des Aufbaus beeinträchtigen. Eine Verbindung durch Fügetechniken, wie beispielsweise Schweißen oder Kleben, kann dies zwar verhindern, wirft aber den weiteren Nachteil auf, daß ein Lösen der Verbindung beispielsweise für einen Austausch der zu verbindenden Elemente oft nur schwer oder gar nicht möglich ist.

Aufgabe der Erfindung ist es, eine möglichst stabile Verbindung der eingangs genannten Art zu schaffen, die zumindest im wesentlichen unsichtbar sowie möglichst schnell und einfach herstellbar und wieder lösbar ist.

Die Lösung dieser Aufgabe erfolgt durch die Merkmale des Anspruchs 1 und insbesondere dadurch, daß wenigstens ein in das rohrförmige Element einführbares Verriegelungselement vorgesehen ist, das im eingeführten Zustand mit einem durch eine Wandöffnung des rohrförmigen Elementes eingesteckten Befestigungsabschnitt des Trägers in Eingriff bringbar ist, wobei das Verriegelungselement zwischen einer das Einstekken und Herausziehen des Befestigungsabschnittes ermöglichenden Entriegelungsstellung und einer den eingesteckten Befestigungsabschnitt herausziehsicher festhaltenden Verriegelungsstellung verstellbar ist.

Erfindungsgemäß wird durch das in das rohrförmige Element einführbare Verriegelungselement eine unsichtbare Kopplung des rohrförmigen Elementes mit dem Träger ermöglicht, denn der Träger kann so ausgeführt werden, daß er am rohrförmigen Element anliegt und die Wandöffnung verdeckt. Gleichzeitig ist gewährleistet, daß die Verriegelung jederzeit wieder gelöst werden kann, und zwar ohne Beschädigung der Bauteile. Durch die erfindungsgemäße Verbindung kann aufgrund der Verriegelung des Befestigungsabschnittes ein überaus stabiler, starrer und belastbarer Zusammenbau aus rohrförmigem Element und Träger gebildet werden. Des weiteren kann die Verriegelung einfach durch Verstellen des Verriegelungselementes und folglich mit nur einem Handgriff hergestellt oder gelöst werden.

Vorteilhafterweise ist gemäß einer bevorzugten Ausführung das Verriegelungselement zum Verstellen im rohrförmigen Element verdrehbar. Hierdurch wird eine besonders einfache Verstellmöglichkeit geschaffen.

Bei einer weiteren bevorzugten Ausführungsform weist der Befestigungsabschnitt zumindest näherungsweise eine Zylinderform auf. Am Verriegelungselement kann eine vorzugsweise zum Befestigungsabschnitt zumindest näherungsweise komplementäre Ausnehmung zur Aufnahme des Befestigungsabschnittes vorgesehen sein. Bei in der Ausnehmung angeordnetem Befestigungsabschnitt kann das Verriegelungselement dann zum Verriegeln und Entriegeln relativ zum Befestigungsabschnitt gedreht werden.

Vorzugsweise ist die Verbindung so ausgebildet, daß der eingesteckte Befestigungsabschnitt in der Verriegelungsstellung des Verriegelungselementes von einer eine Ausnehmung begrenzenden Wand des Verriegelungselementes umgriffen oder hintergriffen ist. Hierdurch ist eine besonders sichere Verriegelung des Befestigungsabschnittes gewährleistet.

Eine besonders stabile und feste Verbindung wird ermöglicht, wenn durch Verstellen, insbesondere Verdrehen, des Verriegelungselementes der Befestigungsabschnitt verklemmbar ist. Das Verklemmen erfolgt bevorzugt in einer Ausnehmung des Verriegelungselementes. Insbesondere ist auf diese Weise das rohrförmige Element in der Verriegelungsstellung ohne Spiel am Träger gehalten, so daß die Verbindung klapperfrei und wackelfrei ist.

Zur Erzielung dieser Klemmung ist vorzugsweise vorgesehen, daß die Form einer Ausnehmung des Verriegelungsabschnittes und/oder die Form des Befestigungsabschnittes in zumindest einem Klemmbereich von einer ein klemmfreies Verstellen ermöglichenden Grundform abweichen bzw. abweicht. Bevorzugt weist der Befestigungsabschnitt einen von einer Kreisform abweichenden Querschnitt auf, der etwa oval oder elliptisch sein kann.

Bei einer besonders bevorzugten Ausführungsform ist in der Verriegelungsstellung zwischen Befestigungsabschnitt und Verriegelungselement und/oder zwischen rohrförmigem Element und Verriegelungselement wenigstens eine Arretierung wirksam, die z. B. über geeignet angeordnete Rastmittel einen wirksamen Schutz gegen unbeabsichtigtes oder selbsttätiges Lösen der Verbindung bietet.

Besonders einfach ist die Herstellung der Verbindung, wenn Führungsmittel vorgesehen sind, durch die beim Einführen des Verriegelungselementes in das rohrförmige Element deren relative Winkelstellung und/oder beim Verdrehen des Verriegelungselementes im rohrförmigen Element deren relative Axialstellung festgelegt ist. Die Führungsmittel können in Form einer Nut- und Stiftanordnung derart vorgesehen sein, daß am Verriegelungselement zumindest eine Nut und am rohrförmigen Element wenigstens ein Stift ausgebildet ist. Durch diese Anordnung wird ein definierter Einführ- und Verriegelungsweg für das Verriegelungselement in dem rohrförmigen Element vorgegeben, der keine falschen Einführ- bzw. Verriegelungsbewegungen zuläßt. Dadurch kann die Kopplung zwischen rohrförmigem Element und Träger besonders einfach und zeitsparend durchgeführt werden.

Besonders vorteilhaft ist es, wenn das Verriegelungselement zumindest eine beim Einführen wirksame Längsnut und wenigstens eine beim Verdrehen wirksame Umfangsnut aufweist, wobei die Längsnut und die Umfangsnut ineinander übergehen. Hierdurch ist ein ununterbrochener Einführ- und Verriegelungsweg für das Verriegelungselement vorhanden, und es wird gleichzeitig im Bereich des Übergangs zwischen Längsnut und Umfangsnut bzw. durch die Umfangsnut eine Begrenzung der Einschubtiefe bewirkt. Somit kann das Verriegelungselement nicht im rohrförmigen Element verlorengehen.

Die Erfindung betrifft außerdem ein Haltesystem, insbesondere für den Sanitärbereich, mit zumindest einem rohrförmigen Element und wenigstens einem Träger, die durch wenigstens eine erfindungsgemäße Verbindung miteinander verbunden sind.

Des weiteren betrifft die Erfindung ein Verriegelungselement für eine erfindungsgemäße Verbindung.

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: ein teilweise dargestelltes Haltesystem gemäß einer Ausführungsform der Erfindung vor der Herstellung von zwei erfindungsgemäßen Verbindungen,
- Fig. 2: ein erfindungsgemäßes Verriegelungselement einer Verbindung von Fig. 1,
- Fig. 3: Darstellungen zur Erläuterung des Verriegelungsvorgangs an einer Verbindung gemäß Fig. 1, und
- Fig. 4: das Haltesystem von Fig. 1 mit hergestellten Verbindungen.

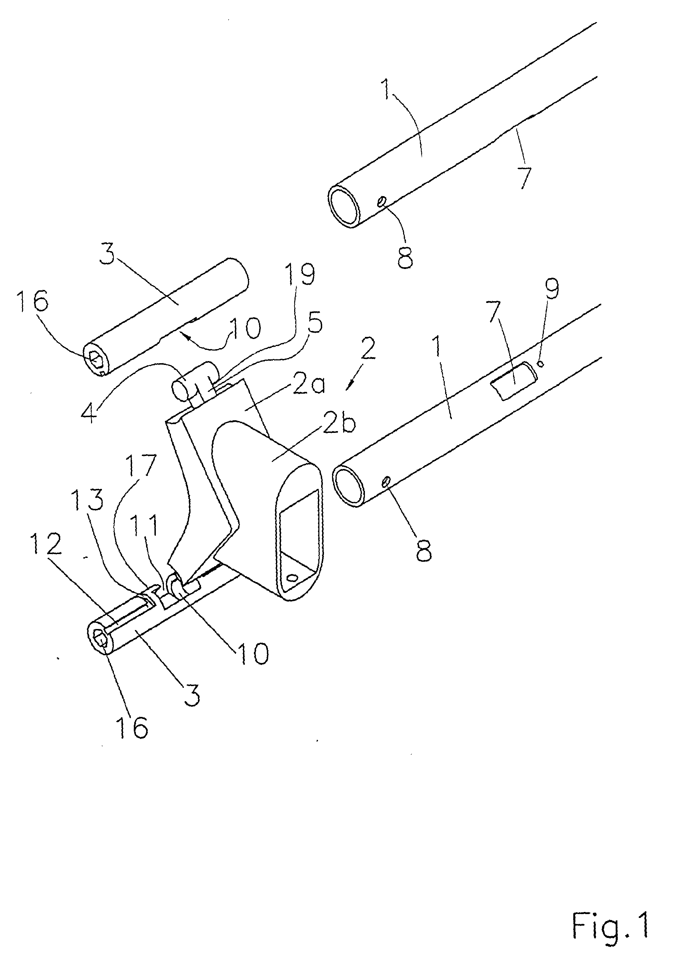

Das Haltesystem von Fig. 1 umfaßt zwei rohrförmige Elemente 1, zwei bügelartige Träger 2, von denen lediglich einer gezeigt ist, sowie zwei Verriegelungselemente 3 für jeden Träger 2. An den Bügelenden des Trägers 2 ist jeweils ein Befestigungsabschnitt 4 vorgesehen.

Die rohrförmigen Elemente 1 weisen in ihrer Wand jeweils eine etwa rechtwinklige Öffnung 7 auf. Auf der dem Rohrende abgewandten Seite der Öffnung 7 ist ein in das Innere des Rohres ragender Stift oder Dorn 9 ausgebildet, der durch Prägung des Rohres hergestellt ist. Des weiteren befindet sich im Bereich des Rohrendes eine kleine Öffnung 8, die z. B. zur Befestigung einer Abdeckkappe (nicht gezeigt) dient.

Der bügelartige Träger 2 umfaßt einen Bügelabschnitt 2a und einen Sokkel 2b zur Befestigung beispielsweise an einer Wand. Durch unterschiedliche, mit dem Bügelabschnitt 2a lösbar verbindbare Sockel 2b ist es möglich, die rohrförmigen Elemente 1 in unterschiedlichen Abständen zur Wand zu positionieren. Der Befestigungsabschnitt 4 an jedem Bügelende ist bolzenförmig und über ein Stabelement 5 mit dem Bügelabschnitt 2a verbunden. Der Träger 2 besteht vorzugsweise aus einem Stahlkern, der mit Kunststoff umspritzt ist.

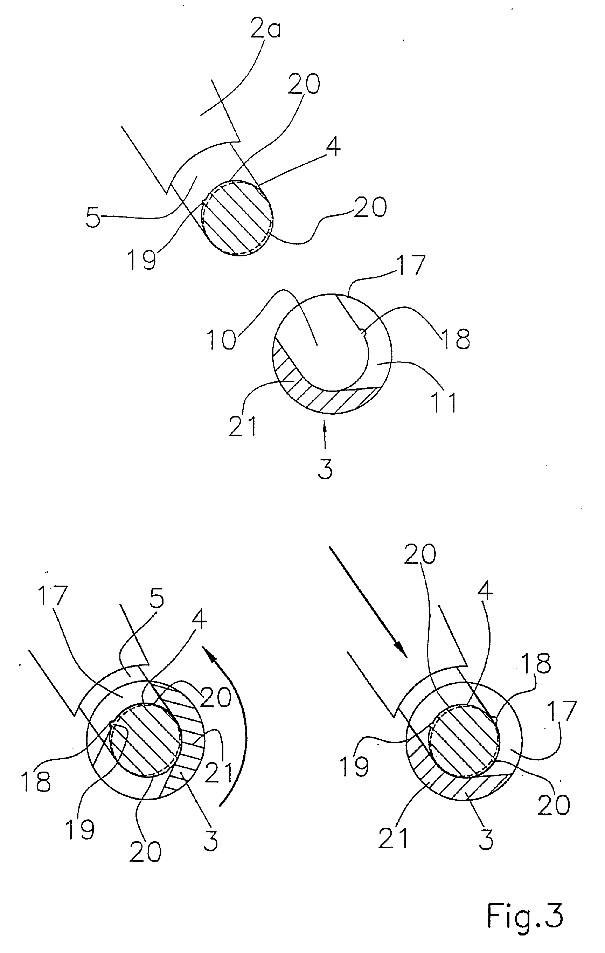

Wie aus Fig. 3 hervorgeht, besitzt der Befestigungsabschnitt 4 einen etwa ovalen Querschnitt, wobei die Bereiche, in denen der Querschnitt von einer Kreisform abweicht, als hier im Querschnitt etwa sichelförmige Klemmbereiche 20 dienen, auf die an anderer Stelle näher eingegangen wird. Zur Verdeutlichung sind die Klemmbereiche 20 in Fig. 3 überproportional groß dargestellt. An dem Befestigungsabschnitt 4 ist zusätzlich eine in Längsrichtung verlaufende Rippe oder ein Wulst 19 ausgebildet.

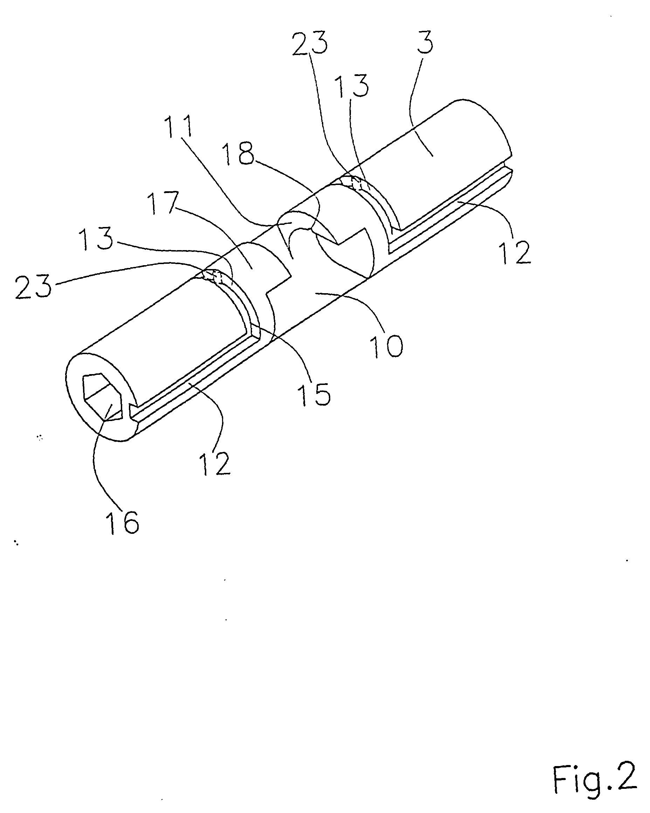

Gemäß Fig. 2 besitzt das bevorzugt aus Kunststoff hergestellte Verriegelungselement 3 eine im wesentlichen zylindrische Form und ist symmetrisch bezüglich einer zur Längsachse senkrecht verlaufenden Ebene aufgebaut.

Im Mittelbereich des Verriegelungselementes 3 ist eine Einsetzausnehmung 10 vorgesehen, deren Rückbereich im Inneren des Verriegelungselementes 3 einen teilkreisförmigen Querschnitt aufweist (vgl. auch Fig.3). In einem mittleren Bereich einer die Ausnehmung 10 begrenzenden Wand 17 ist eine Verriegelungsausnehmung 11 vorgesehen, die in Längsrichtung kürzer ist als die Einsetzausnehmung 10.

An der Wand 17 der Einsetzausnehmung 10 ist innen eine Nut 18 ausgebildet, die mit der erwähnten Rippe 19 des Bolzens 4 zusammenwirkt und zu dessen Arretierung in der Ausnehmung 10 dient. Hierauf wird an anderer Stelle näher eingegangen.

Darüber hinaus ist das Verriegelungselement 3 auf beiden Seiten der Ausnehmung 10 mit Führungsnuten, nämlich einer Längsnut 12 und einer Umfangsnut 13, versehen. Die Längsnut 12 ist zur Stirnseite des Verriegelungselementes 3 hin offen und endet kurz vor der Einsetzausnehmung 10, wo sie in die Umfangsnut 13 übergeht.

Des weiteren ist in Fig. 2 als Alternative oder Ergänzung zu der vorstehend erläuterten Arretierung eine weitere Arretierungsmöglichkeit angedeutet, die lediglich in gestrichelten Linien in beiden Umfangsnuten 13 gezeigt ist, aber auch nur in einer Umfangsnut 13 vorgesehen sein kann. Hierbei ist eine nach Art eines Schnappverschlusses wirkende Verjüngung 23 in der Umfangsnut 13 vorgesehen, die bei verriegeltem Befestigungsabschnitt mit einem Dorn 9 des rohrförmigen Elementes 1 zusammenwirkt. Auch hierauf wird an anderer Stelle näher eingegangen.

An den Stirnseiten des Verriegelungselementes 3 ist jeweils ein Betätigungsabschnitt 16 für ein Werkzeug (nicht gezeigt), hier einen Innensechskant, ausgebildet.

Um zur Herstellung einer erfindungsgemäßen Verbindung ein rohrförmiges Element 1 mit dem Träger 2 zu koppeln, wird das Verriegelungselement 3 in ein Rohrende eingeführt. Aufgrund seines symmetrischen Aufbaus ist das Verriegelungselement 3 beidseitig verwendbar. Bei Einführen des Verriegelungselementes 3 in falscher Winkelstellung stößt es an den Dorn 9. Durch Verdrehen des Verriegelungselementes 3 kann der Dorn 9 in die Längsnut 12 gelangen und das Verriegelungselement 3 weiter eingeschoben werden. Wenn der Dorn 9 an die Wand 15 der Umfangsnut 13 anschlägt, ist die maximale Einschubtiefe des Verriegelungselementes 3 in dem rohrförmigen Element 1 erreicht. In dieser Stellung liegt die Öffnung 7 in der Rohrwand über der Einsetzausnehmung 10 des Verriegelungselementes 3.

Nach dem Einstecken des Befestigungsabschnittes 4 in die Einsetzausnehmung 10 bzw. Aufstecken des das Verriegelungselement 3 enthaltenden rohrförmigen Elementes 1 auf den Befestigungsabschnitt 4 wird das Verriegelungselement 3 - geführt über den nunmehr mit der Umfangsnut 13 zusammenwirkenden Dorn 9 - relativ zum Befestigungsabschnitt 4 im rohrförmigen Element 1 verdreht. Dabei rückt das den Befestigungsabschnitt 4 mit dem Bügelabschnitt 2a verbindende Stabelement 5 in die Verriegelungsausnehmung 11 in der Wand 17 ein, wodurch der Befestigungsabschnitt 4 von der Wand 17 verriegelnd umgriffen wird.

Zusätzlich zu dieser Verriegelung erfolgt durch das Verdrehen des Verriegelungselementes 3 ein Verklemmen des Befestigungsabschnittes 4 in der Einsetzausnehmung 10, wie im folgenden anhand von Fig. 3 beschreiben wird.

Gemäß dem rechten Teil von Fig. 3 kann der Befestigungsabschnitt 4 ohne störenden Widerstand in die Ausnehmung 10 eingesteckt werden, da die Klemmbereiche 20 dabei nicht oder nur in vergleichsweise geringem Maße mit den Wänden 17, 21 zusammenwirken.

Im mittleren Teil von Fig. 3 befindet sich der Befestigungsabschnitt 4 im vollständig eingesetzten Zustand. Diese Stellung entspricht der Entriegelungsstellung.

Beim Verdrehen des Verriegelungselementes 3 in die Verriegelungsstellung (linker Teil von Fig. 3) wird der Befestigungsabschnitt 4 durch stetige Zunahme der Klemmkraft, die durch die Form der Klemmbereiche 20 bedingt ist, zwischen Wand 17 und Wand 21 eingeklemmt. Dies ist durch die Elastizität des Verriegelungselementes 3 und/oder des Befestigungsabschnittes 4 möglich.

Kurz nachdem die Scheitelpunkte der Klemmbereiche 20 mit den Wänden 17, 21 zusammenwirken - in dieser Stellung ist die Klemmkraft maximal - rastet die Rippe 19 in die Nut 18 ein. Dies hat eine Arretierung zur Folge, die sich nicht von selbst lösen kann. Dabei zeigt das spürbare Einrasten dem Benutzer das Erreichen der Verriegelungsstellung an.

Alternativ oder gleichzeitig kann in der Verriegelungsstellung die bereits erwähnte weitere Arretierung (in Fig. 2 nur mit gestrichelten Linien angedeutet) durch Einrasten des Dornes 9 hinter der kurz vor dem Ende der Umfangsnut 13 ausgebildeten Verjüngung 23 der Umfangsnut 13 wirksam sein. Die beim Verdrehen des Verriegelungselementes 3 vom Dorn 9 zu überwindende Verjüngung 23 kann bei der Herstellung des Verriegelungselementes 3 im Spritzgußverfahren in besonders einfacher Weise gebildet werden.

Die für die Arretierung sorgenden Bereiche sind so bemessen, daß auch in der Verriegelungsstellung eine Klemmkraft wirksam ist, was eine spiel- und klapperfreie und somit feste und sichere Verbindung zur Folge hat.

Wie in der vorhergehenden Beschreibung deutlich wird, besitzt das Verriegelungselement 3 die Funktion einer Klemmbuchse.

Die erfindungsgemäße Verbindung zwischen einem rohrförmigen Element 1 und dem Träger 2 kann somit einfach und schnell hergestellt werden, wobei Fehlbedienungen insbesondere aufgrund der Führungs- und Rastmittel ausgeschlossen sind.

Auf ebenso einfache Weise kann die Verbindung durch Zurückdrehen des Verriegelungselementes 3 in die Entriegelungsstellung wieder gelöst werden. Dadurch wird der Befestigungsabschnitt 4 freigegeben, so daß der Träger 2 aus der Ausnehmung 10 herausgezogen bzw. das rohrförmige Element 1 vom Träger 2 abgenommen werden kann.

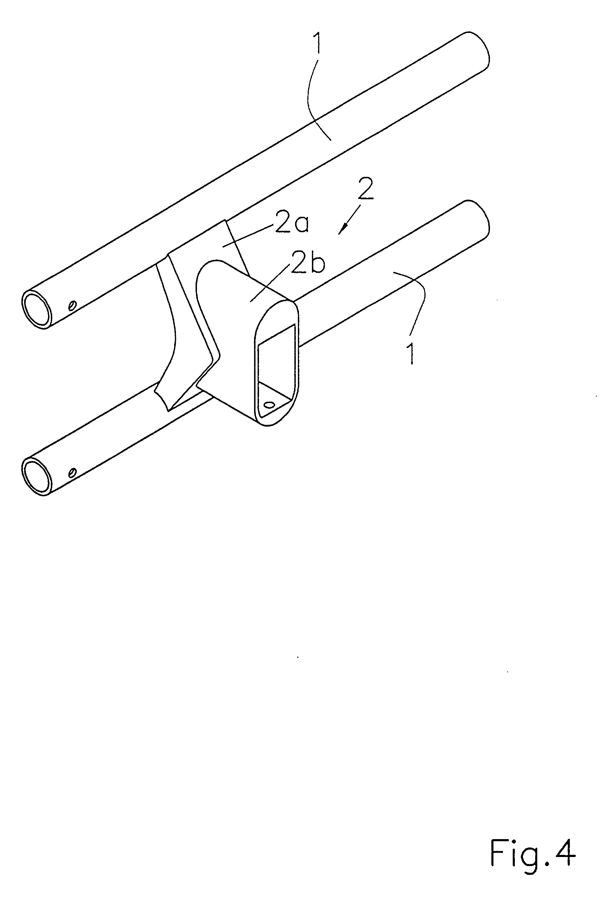

Fig. 4 zeigt das zusammengesetzte Haltesystem. Es ist weder das Verriegelungselement 3 noch die Öffnung 7 zu erkennen, d.h. die erfindungsgemäße Verbindung ist in diesem Zustand unsichtbar.

### Bezugszeichenliste:

- 1: rohrförmiges Element
- 2: Träger
- 2a: Bügelabschnitt
- 2b: Sockel
- 3: Verriegelungselement (Klemmbuchse)
- 4: Befestigungsabschnitt
- 5: Stabelement
- 7: Wandöffnung
- 8: Öffnung
- 9: Stift
- 10: Ausnehmung
- 11: Verriegelungsausnehmung
- 12: Längsnut
- 13: Umfangsnut
- 15: Wand
- 16: Betätigungsabschnitt
- 17: Wand
- 18: Nut
- 19: Rippe
- 20: Klemmbereich
- 21: Wand
- 23: Verjüngung

## Patentansprüche

1. Verbindung zwischen einem rohrförmigen Element (1), insbesondere einer Haltestange, und einem Träger (2), insbesondere einem Wandhalter, mit wenigstens einem in das rohrförmige Element (1) einführbaren Verriegelungselement (3), das im eingeführten Zustand mit einem durch eine Wandöffnung (7) des rohrförmigen Elementes (1) eingesteckten Befestigungsabschnitt (4) des Trägers (2) in Eingriff bringbar ist, wobei das Verriegelungselement (3) zwischen einer das Einstecken und Herausziehen des Befestigungsabschnittes (4) ermöglichenden Entriegelungsstellung und einer den eingesteckten Befestigungsabschnitt (4) herausziehsicher festhaltenden Verriegelungsstellung verstellbar ist.

2. Verbindung nach Anspruch 1,
dadurch gekennzeichnet,
daß das Verriegelungselement (3) zum Verstellen im rohrförmigen Element (1) verdrehbar ist.

3. Verbindung nach Anspruch 1 oder 2,
dadurch gekennzeichnet,
daß das Verriegelungselement (3) eine etwa zylindrische Grundform aufweist.

4. Verbindung nach zumindest einem der vorhergehenden Ansprüche,
dadurch gekennzeichnet,
daß der Befestigungsabschnitt (4) zumindest näherungsweise eine Zylinderform aufweist.

5. Verbindung nach zumindest einem der vorhergehenden Ansprüche,
dadurch gekennzeichnet,
daß das Verriegelungselement (3) eine vorzugsweise zum Befestigungsabschnitt (4) zumindest näherungsweise komplementäre Ausnehmung (10) zur Aufnahme des Befestigungsabschnittes (4) aufweist.

6. Verbindung nach zumindest einem der vorhergehenden Ansprüche,
dadurch gekennzeichnet,
daß der eingesteckte Befestigungsabschnitt (4) in der Verriegelungsstellung des Verriegelungselementes (3) von einer eine Ausnehmung (10) begrenzenden Wand (17) des Verriegelungselementes (3) umgriffen oder hintergriffen ist.

7. Verbindung nach zumindest einem der vorhergehenden Ansprüche,
dadurch gekennzeichnet,
daß durch Verstellen, insbesondere Verdrehen, des Verriegelungselementes (3) der Befestigungsabschnitt (4) am rohrförmigen Element (1) und/oder am Verriegelungselement (3), bevorzugt in einer Ausnehmung (10) des Verriegelungselementes (3), verklemmbar ist.

8. Verbindung nach Anspruch 7,
dadurch gekennzeichnet,
daß die Klemmkraft beim Verstellen in die Verriegelungsstellung insbesondere stetig zunimmt.

9. Verbindung nach Anspruch 7 oder 8,
dadurch gekennzeichnet,
daß die Form einer Ausnehmung (10) des Verriegelungselementes (3) und/oder die Form des Befestigungsabschnittes (4) in zumindest einem Klemmbereich (20) von einer ein klemmfreies Verstellen ermöglichenden Grundform abweichen bzw. abweicht.

10. Verbindung nach Anspruch 9,
dadurch gekennzeichnet,
daß der Befestigungsabschnitt (4) einen von einer Kreisform abweichenden Querschnitt aufweist, der bevorzugt etwa oval oder elliptisch ist.

11. Verbindung nach zumindest einem der vorhergehenden Ansprüche,
dadurch gekennzeichnet,
daß in der Verriegelungsstellung zwischen dem Befestigungsabschnitt (4) und dem Verriegelungselement (3) eine Arretierung (18, 19) wirksam ist, die bevorzugt von am Befestigungsabschnitt (4) und/oder am Verriegelungselement (3) ausgebildeten Rastmitteln (18, 19) gebildet ist.

12. Verbindung nach Anspruch 11,
dadurch gekennzeichnet,
daß die Arretierung als Nut- und Rippenanordnung (18, 19) ausgebildet ist, wobei bevorzugt an der Innenwand einer Ausnehmung (10) des Verriegelungselementes (3) zumindest eine Nut (18) und an dem Befestigungsabschnitt (4) wenigstens eine Rippe (19) vorgesehen ist.

13. Verbindung nach zumindest einem der vorhergehenden Ansprüche,
dadurch gekennzeichnet,
daß in der Verriegelungsstellung zwischen dem rohrförmigen Element (1) und dem Verriegelungselement (3) eine Arretierung (9, 23) wirksam ist, die bevorzugt von am rohrförmigen Element (1) und/oder am Verriegelungselement (3) ausgebildeten Rastmitteln (9, 23) gebildet ist.

14. Verbindung nach Anspruch 13,
dadurch gekennzeichnet,
daß die Arretierung als Nut- und Stiftanordnung (9, 13, 23) ausgebildet ist, wobei bevorzugt an der Innenwand des rohrförmigen Elementes (1) zumindest ein Stift (9) und an einer Umfangsnut (13) des Verriegelungselementes (3) wenigstens eine beim Verstellen des Verriegelungselementes (3) mit dem Stift (9) zusammenwirkende Verjüngung (23) vorgesehen ist.

15. Verbindung nach zumindest einem der Ansprüche 11 bis 14,
dadurch gekennzeichnet,
daß unmittelbar vor dem Wirksamwerden der Arretierung (18, 19; 9, 23) eine zwischen dem rohrförmigen Element (1) und/oder dem Verriegelungselement (3) einerseits und dem Befestigungsabschnitt (4) andererseits wirksame Klemmkraft maximal ist.

16. Verbindung nach zumindest einem der vorhergehenden Ansprüche,
dadurch gekennzeichnet,
daß Führungsmittel (9, 12, 13) vorgesehen sind, durch die beim Einführen des Verriegelungselementes (3) in das rohrförmige Element (1) deren relative Winkelstellung und/oder beim Verdrehen des Verriegelungselementes (3) im rohrförmigen Element (1) deren relative Axialstellung festgelegt ist.

17. Verbindung nach Anspruch 16,
dadurch gekennzeichnet,
daß die Führungsmittel in Form einer Nut- und Stiftanordnung (9, 12, 13) vorgesehen sind, wobei bevorzugt am Verriegelungselement (3) zumindest eine Nut (12, 13) und am rohrförmigen Element (1) wenigstens ein Stift (9) ausgebildet ist.

18. Verbindung nach Anspruch 16 oder 17,
dadurch gekennzeichnet,
daß das Verriegelungselement (3) zumindest eine beim Einführen wirksame Längsnut (12) und wenigstens eine beim Verdrehen wirksame Umfangsnut (13) aufweist, wobei die Längsnut (12) und die Umfangsnut (13) ineinander übergehen.

19. Verbindung nach zumindest einem der vorhergehenden Ansprüche,
dadurch gekennzeichnet,
daß zumindest eine Nut- und Stiftanordnung (9, 13, 23) gleichzeitig als Führung und Arretierung für das Verriegelungselement (3) vorgesehen ist.

20. Verbindung nach zumindest einem der vorhergehenden Ansprüche,
dadurch gekennzeichnet,
daß das Verriegelungselement (3) symmetrisch bezüglich einer zu dessen Längsachse senkrecht verlaufenden Ebene aufgebaut ist.

21. Haltesystem, insbesondere für den Sanitärbereich, mit zumindest einem rohrförmigen Element (1) und wenigstens einem Träger (2), die durch wenigstens eine Verbindung nach zumindest einem der vorhergehenden Ansprüche miteinander verbunden sind.

22. Haltesystem nach Anspruch 21,
dadurch gekennzeichnet,
daß zwei parallel und im montierten Zustand bevorzugt im gleichen Abstand zu einer Wand verlaufende rohrförmige Elemente (1) in Verbindung mit vorzugsweise zwei Trägern (2) vorgesehen sind, wobei die Träger (2) bügelartig ausgebildet sind und jedes Bügelende einen Befestigungsabschnitt (4) aufweist.

23. Verriegelungselement mit den ein Verriegelungselement (3) betreffenden Merkmalen zumindest eines der Ansprüche 1 bis 20.
